# EUROPEAN PATENT SPECIFICATION

(11) **EP 4 395 420 B1**
(45) Date of publication and mention of the grant of the patent: **18.11.2026**
(21) Application number: 24177149.2
(22) Date of filing: 18.01.2019
(51) Int. Cl.: H04W 4/80, H04W 52/00

(54) **LOW POWER IOT BOOSTER NETWORK**
IOT-VERSTÄRKERNETZWERK MIT GERINGER LEISTUNG
RÉSEAU D'AMPLIFICATION IOT À FAIBLE PUISSANCE

(30) Priority: 19.01.2018 US 201862619703 P
(43) Date of publication of application: 03.07.2024
(62) Document number(s) of the earlier application(s) in accordance with Art. 76 EPC: 19741452.7 / 3 741 143
(73) Proprietor: Nextivity, Inc., San Diego, CA 92127 (US)
(72) Inventor: Lotter, Michiel Petrus, San Diego, 92127-1889 (US)
(74) Representative: Slingsby Partners LLP

(56) References cited:
- US-A1- 2009 058 635
- US-A1- 2013 311 140

## Description

### BACKGROUND

Networks of devices that connect machines to the Internet are becoming increasingly popular. Commonly, such networks are known as IoT (Internet-of-Things) networks. Within an IoT network, IoT nodes (which are very often battery powered) typically measure physical values (such as temperature for example), and then perform one or more of the following: store the value locally; transmit the value to the Internet; analyze the value and make a local decision if an action is required and if the action must be reported to the Internet; or any combination of the above.

IoT networks have a few common characteristics, two of which are very important. They must be able to operate over a very long range, and must be able to operate with very low power consumption.

A number of different network technologies are currently being used to deploy IoT networks. These include LoRa, SigFox, LTE CAT-M1 and NB-IoT. These networks have been specifically designed to address the two specific characteristics noted above. However, some problems may still remain unsolved given a conventional architecture of these networks.

Specifically, the uplink power available at the device may not be sufficient to reach the base station and therefore a link to the Internet cannot be established. Further, when using high uplink power to communicate with the base station, the battery life of an IoT node may be severely impacted. Lastly, because of limited processing power and energy available in the node, only limited decisions can be made based on the captured data. This forces more frequent communications with the Internet, which can reduce the overall lifespan of the IoT node.

### SUMMARY

In this document, a system including an IOT node is disclosed to address the issues described above. In some aspects, the IoT Node includes one or more sensors, such as a sensor processor or processing element, and an IoT Modem that can connect to the internet or a private IoT network to deliver data to an IoT Hub application. The IoT Node may also include one or more short range wireless links, such as Bluetooth Low Energy (BTLE), which preferably operate with considerably reduced power consumption. The IoT Node may communicate directly to a base station and through the base station be connected to the IoT Network (which could be the internet). Alternatively, the IoT Node may connect to a base station through a repeater.

In some aspects, the IoT booster includes a signal booster and booster function, as well as an IoT modem. It may also include one or more short range wireless links, such as BTLE. The booster can receive a signal from the IoT modem in the IoT node, and boost this signal to allow it to be received by the base station and to then be relayed to the IoT network. It is also possible that the IoT booster may receive signals from the IoT node using the short range wireless link. In both cases (connection via the short range wireless link or the IoT modem link), multiple IoT nodes can connect to a single IoT booster.

According to the invention, there is provided a system as set out in claim 1.

The short range wireless transceiver of the IoT booster may be connected with the signal booster.

The first IoT modem of the IoT node may be connected to the IoT network to deliver data to the IoT Hub. The first IoT modem may be configured to connect to the IoT network by communicating with a base station through the IoT booster. The IoT node can be connected to the base station through the IoT booster, and in some implementations, the base station is far-away from the IoT booster.

The first IoT modem may be connected to the signal booster of the IoT booster. The signal booster of the IoT booster may be connected to the second IoT modem. The IoT Hub can either host or execute an application to which the data is delivered.

The IoT network may be one of: the internet; and a private network.

In some aspects, the individual IoT node is configured with an On/Off schedule. In yet other aspects, the sensor processor of the individual IoT node is further configured to synchronize its processing activity with the On/Off schedule of the individual IoT node.

In some implementations, the short range wireless channel is a Bluetooth Low Energy channel.

The details of one or more embodiments are set forth in the accompanying drawings and the description below. Other features and advantages will be apparent from the description and drawings, and from the claims.

### BRIEF DESCRIPTION OF THE DRAWINGS

These and other aspects will now be described in detail with reference to the following drawings.

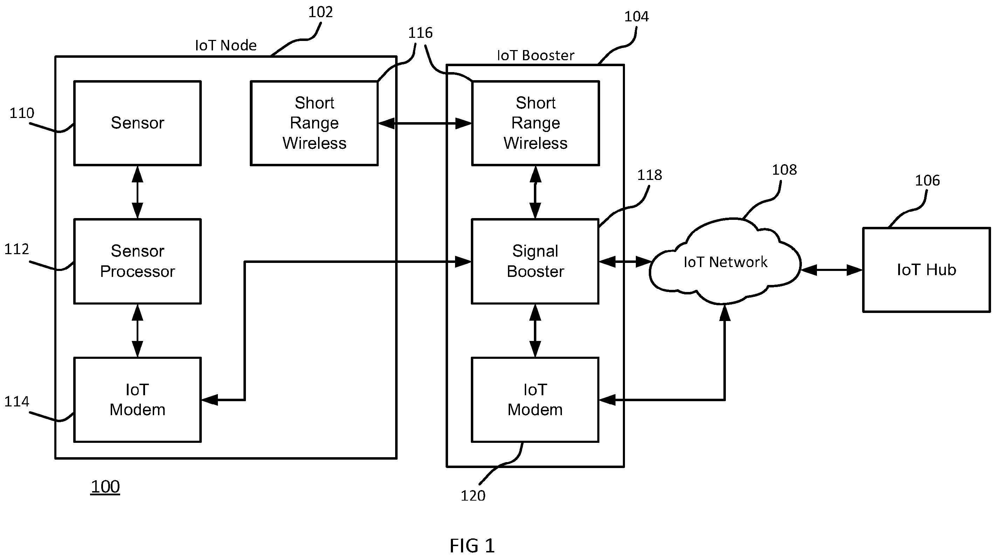

FIG. 1 illustrates a low power IoT booster and IoT booster network and system.

Like reference symbols in the various drawings indicate like elements.

### DETAILED DESCRIPTION

This document describes a low power IoT booster and IoT booster network and system. FIG. 1 illustrates an implementation of a system 100. The system 100 includes an IoT node 102 and an IoT booster 104 connected to an IoT hub 106 via an IoT network 108, such as a communication network. The IoT network 108 can include any number of wired or wireless communication nodes and channels.

In some implementations, the IoT node 102 includes one or more sensors 110, and/or a sensor processor 112 or other form of processing element, and an IoT modem 114 that can connect to the Internet or a private IoT network 108 to deliver data to an application hosted by, or executed by, the IoT hub 106. The IoT node 102 may also include one or more short range wireless links (such as BTLE). The IoT node 102 can communicate directly to a base station, and through the base station be connected to the IoT network 108, which can be the Internet. Alternatively, the IoT node 102 may connect to a base station through a repeater, such as the IoT booster 104 shown in FIG. 1.

In accordance with some implementations, the IoT booster 104 contains a signal booster 118 (such as the Cel-Fi^{®} GO-X signal booster) as well as a second IoT modem 120. The IoT booster 104 can also include a short range wireless link (such as BTLE). The IoT booster 104 receives a signal from the IoT modem 114 in the IoT node 102, and boosts this signal to allow it to be received by the base station and to then be relayed to the IoT network 108. The IoT booster 104 may also receive signals from the IoT node 102 using the short range wireless link. In both cases (connection via the short range wireless link or the IoT modem link), multiple IoT nodes 102 can connect to a single IoT booster 104.

The low power IoT booster network shown in FIG. 1 addresses various problems with current technology. It improves the overall link budget between IoT nodes 102, which can be deployed in, or associated with, an appliance or other object, and the IoT network 108 and IoT hub 106, to allow for a much further reach. This can be achieved in a number of ways, such as increased uplink power for the booster as compared to the IoT modem 114 in the IoT node 102. It can also lead to an improved antenna design, and placement of the antenna connected to the donor side of the booster, as well as improves the overall battery life of the IoT nodes 102. IoT nodes 102 can reduce their Tx power levels as they only need to reach the IoT booster 104 and not the far-away base station or IoT hub 106.

The use of a sensor processor 112 allows complex decision making at the edge of the network and system 100. This reduces the number of times an IoT node 102 must contact the network, and as such, reduces the total energy expensed by the system 100. As can be understood from the above points, the IoT booster 104 takes on the task of communicating with the IoT network 108 in an efficient manner. If the IoT booster 104 is not energy efficient, the overall system will be less efficient.

In accordance with some implementations, the IoT booster 104 incorporates a wireless signal booster that can be switched on and off depending on whether the boosting functions is needed by devices connected via the IoT booster 104. The wireless signal booster receives a schedule from devices connecting through the IoT booster 104 to the IoT network 108 of when the booster must be turned ON and provide signal boosting functionality. Further, the wireless signal booster receives a schedule from devices connecting through the booster to the network of when the booster must be turned ON and provide signal boosting functionality where the schedule is delivered to the booster using the short range wireless link.

In some implementations, a wireless signal booster receives a schedule from devices connecting through the booster to the network of when the booster must be turned ON and provide signal boosting functionality where the schedule is delivered to the booster via remote server. In yet other implementations, a wireless signal booster incorporates a wireless modem and where the wake-up schedule for the booster is determined by the wake-up schedule for the incorporated wireless modem.

In accordance with some implementations, a processing system is presented that can combine the wake-up schedules of multiple IoT nodes 102 as well as the IoT booster 104 into a single wake-up schedule design to optimize the power efficiency of the system. The system can synchronize the wake-up schedule of a number of devices connected to a wireless signal booster in order to reduce the time the booster must be awake and relaying a signal.

In yet other implementations, the sensor processor 112 is provided in an IoT node 102 that synchronizes its processing activity with the On/Off schedule of the IoT node 102. The sensor processor 112 further can synchronize its processing activity with the On/Off schedule of the IoT booster 104, and requires no timed clock element, but whose operation can at least be coarsely synchronized with external events, to process input signals thereby reducing the overall power consumed by the sensor processor.

Although a few embodiments have been described in detail above, other modifications are possible. Other embodiments may be within the scope of the following claims.

## Claims

1. A system for communication with an Internet of Things, IoT, hub via an IoT network, the IoT network comprising one or more wireless communication networks, the system comprising:
one or more IoT nodes, each individual IoT node including:
a sensor to sense a physical representation of an environment associated with the individual IoT node;
a sensor processor to generate a value of the physical representation;
a first IoT modem to transmit the value of the physical representation in a wireless signal on a wireless channel; and
a first short range wireless transceiver to transmit signals over a short range wireless link; and
an IoT booster in communication between the one or more IoT nodes and a base station of the IoT network, the IoT booster having:
a signal booster to receive the value of the physical representation transmitted by the first IoT modem of the individual IoT node on the wireless channel,
a second short range wireless transceiver arranged to receive short range signals transmitted by the first short range wireless transceiver and transmit them to the signal booster; and
a second IoT modem,
wherein the signal booster is arranged to receive the short range signals received from the second short range wireless transceiver and to boost the wireless signal containing the value of the physical representation,
and wherein the second IoT modem is arranged to transmit the boosted wireless signal to the IoT hub via the base station of the IoT network.

2. The system in accordance with claim 1, wherein the short range wireless transceiver of the IoT booster is connected with the signal booster.

3. The system in accordance with claim 1 or claim 2, wherein the first IoT modem of the IoT node is connected to the IoT network to deliver data including the value of the physical representation to the IoT Hub.

4. The system in accordance with claim 3, wherein the first IoT modem is configured to connect to the IoT network by communicating with the base station through the IoT booster.

5. The system in accordance with claim 4, wherein the IoT node is connected to the base station through the IoT booster, wherein the base station is far-away from the IoT booster.

6. The system in accordance with any preceding claim, wherein the first IoT modem is connected to the signal booster of the IoT booster.

7. The system in accordance with any preceding claim, wherein the signal booster of the IoT booster is connected to the second IoT modem.

8. The system in accordance with any of claims 3 to 7, wherein the IoT Hub either hosts or executes an application , and wherein the data is delivered to the application.

9. The system in accordance with any preceding claim, wherein the IoT network is one of: the internet; and a private network.

10. The system in accordance with any preceding claim, wherein the IoT node is configured with an On/Off schedule.

11. The system in accordance with claim 10, wherein the sensor processor of the IoT node is further configured to synchronize its processing activity with the On/Off schedule of the IoT node.

12. The system in accordance with any preceding claim, wherein the short range wireless channel is a Bluetooth Low Energy channel.

## Patentansprüche

1. System zur Kommunikation mit einem Internet-of-Things-, IoT-Hub über ein IoT-Netzwerk, wobei das IoT-Netzwerk ein oder mehrere drahtlose Kommunikationsnetzwerke umfasst, wobei das System Folgendes umfasst:
einen oder mehrere IoT-Knoten, wobei jeder individuelle IoT-Knoten Folgendes beinhaltet:
einen Sensor, um eine physische Darstellung einer Umgebung assoziiert mit dem individuellen IoT-Knoten zu erfassen;
einen Sensorprozessor, um einen Wert der physischen Darstellung zu erzeugen;
ein erstes IoT-Modem, um den Wert der physischen Darstellung in einem drahtlosen Signal auf einem drahtlosen Kanal zu übertragen; und
einen ersten drahtlosen Kurzstreckensendeempfänger, um Signale über einen drahtlosen Kurzstreckenlink zu übertragen; und
einen IoT-Verstärker in Kommunikation zwischen dem einen oder den mehreren IoT-Knoten und einer Basisstation des IoT-Netzwerks, wobei der IoT-Verstärker Folgendes aufweist:
einen Signalverstärker, um den Wert der physischen Darstellung zu empfangen, der durch das erste IoT-Modem des individuellen IoT-Knotens auf dem drahtlosen Kanal übertragen wird,
einen zweiten drahtlosen Kurzstreckensendeempfänger, der dazu angeordnet ist, Kurzstreckensignale zu empfangen, die durch den ersten drahtlosen Kurzstreckensendeempfänger übertragen werden, und sie an den Signalverstärker zu übertragen; und
ein zweites IoT-Modem,
wobei der Signalverstärker dazu angeordnet ist, die Kurzstreckensignale, die von dem zweiten drahtlosen Kurzstreckensendeempfänger empfangen werden, zu empfangen und das drahtlose Signal, das den Wert der physischen Darstellung enthält, zu verstärken,
und wobei das zweite IoT-Modem dazu angeordnet ist, das verstärkte drahtlose Signal an den IoT-Hub über die Basisstation des IoT-Netzwerks zu übertragen.

2. System nach Anspruch 1, wobei der drahtlose Kurzstreckensendeempfänger des IoT-Verstärkers mit dem Signalverstärker verbunden ist.

3. System nach Anspruch 1 oder Anspruch 2, wobei das erste IoT-Modem des IoT-Knotens mit dem IoT-Netzwerk verbunden ist, um Daten, die den Wert der physischen Darstellung beinhalten, an den IoT-Hub zu liefern.

4. System nach Anspruch 3, wobei das erste IoT-Modem dazu konfiguriert ist, sich mit dem IoT-Netzwerk zu verbinden, indem es mit der Basisstation durch den IoT-Verstärker kommuniziert.

5. System nach Anspruch 4, wobei der IoT-Knoten mit der Basisstation durch den IoT-Verstärker verbunden ist, wobei die Basisstation weit weg von dem IoT-Verstärker ist.

6. System nach einem vorhergehenden Anspruch, wobei das erste IoT-Modem mit dem Signalverstärker des IoT-Verstärkers verbunden ist.

7. System nach einem vorhergehenden Anspruch, wobei der Signalverstärker des IoT-Verstärkers mit dem zweiten IoT-Modem verbunden ist.

8. System nach einem der Ansprüche 3 bis 7, wobei der IoT-Hub eine Anwendung entweder hostet oder ausführt und wobei die Daten an die Anwendung geliefert werden.

9. System nach einem vorhergehenden Anspruch, wobei das IoT-Netzwerk eines von Folgendem ist: dem Internet; und einem privaten Netzwerk.

10. System nach einem vorhergehenden Anspruch, wobei der IoT-Knoten mit einem Ein/Aus-Plan konfiguriert ist.

11. System nach Anspruch 10, wobei der Sensorprozessor des IoT-Knotens ferner dazu konfiguriert ist, seine Verarbeitungsaktivität mit dem Ein/Aus-Plan des IoT-Knotens zu synchronisieren.

12. System nach einem vorhergehenden Anspruch, wobei der drahtlose Kurzstreckenkanal ein Bluetooth-Low-Energy-Kanal ist.

## Revendications

1. Système permettant la communication avec un concentrateur de l'Internet des Objets, IoT, par l'intermédiaire d'un réseau IoT, le réseau IoT comprenant un ou plusieurs réseaux de communication sans fil, le système comprenant :
un ou plusieurs nœuds IoT, chaque nœud IoT individuel comprenant :
un capteur pour détecter une représentation physique d'un environnement associé au nœud IoT individuel ;
un processeur de capteur pour générer une valeur de la représentation physique ;
un premier modem IoT pour transmettre la valeur de la représentation physique dans un signal sans fil sur un canal sans fil ; et
un premier émetteur-récepteur sans fil à courte portée pour transmettre des signaux sur une liaison sans fil à courte portée ; et
un amplificateur IoT en communication entre les un ou plusieurs nœuds IoT et une station de base du réseau IoT, l'amplificateur IoT présentant :
un amplificateur de signal pour recevoir la valeur de la représentation physique transmise par le premier modem IoT du nœud IoT individuel sur le canal sans fil,
un second émetteur-récepteur sans fil à courte portée agencé pour recevoir des signaux à courte portée transmis par le premier émetteur-récepteur sans fil à courte portée et les transmettre à l'amplificateur de signal ; et
un second modem IoT,
dans lequel l'amplificateur de signal est agencé pour recevoir les signaux à courte portée reçus en provenance du second émetteur-récepteur sans fil à courte portée et pour amplifier le signal sans fil contenant la valeur de la représentation physique,
et dans lequel le second modem IoT est agencé pour transmettre le signal sans fil amplifié au concentrateur IoT par l'intermédiaire de la station de base du réseau IoT.

2. Système selon la revendication 1, dans lequel l'émetteur-récepteur sans fil à courte portée de l'amplificateur IoT est connecté à l'amplificateur de signal.

3. Système selon la revendication 1 ou la revendication 2, dans lequel le premier modem IoT du nœud IoT est connecté au réseau IoT pour distribuer des données comprenant la valeur de la représentation physique au concentrateur IoT.

4. Système selon la revendication 3, dans lequel le premier modem IoT est configuré pour se connecter au réseau IoT en communiquant avec la station de base par l'intermédiaire de l'amplificateur IoT.

5. Système selon la revendication 4, dans lequel le nœud IoT est connecté à la station de base par l'intermédiaire de l'amplificateur IoT, dans lequel la station de base est éloignée de l'amplificateur IoT.

6. Système selon une quelconque revendication précédente, dans lequel le premier modem IoT est connecté à l'amplificateur de signal de l'amplificateur IoT.

7. Système selon une quelconque revendication précédente, dans lequel l'amplificateur de signal de l'amplificateur IoT est connecté au second modem IoT.

8. Système selon l'une quelconque des revendications 3 à 7, dans lequel le concentrateur IoT héberge ou bien exécute une application, et dans lequel les données sont distribuées à l'application.

9. Système selon une quelconque revendication précédente, dans lequel le réseau IoT est l'un parmi : l'Internet ; et un réseau privé.

10. Système selon une quelconque des revendications précédentes, dans lequel le nœud IoT est configuré avec une programmation marche/arrêt.

11. Système selon la revendication 10, dans lequel le processeur de capteur du nœud IoT est en outre configuré pour synchroniser son activité de traitement avec la programmation marche/arrêt du nœud IoT.

12. Système selon une quelconque revendication précédente, dans lequel le canal sans fil à courte portée est un canal Bluetooth basse énergie.
